# FASCICULE DE BREVET EUROPEEN

(11) **EP 2 504 556 B1**
(45) Date de publication et mention de la délivrance du brevet: **29.06.2016**
(21) Numéro de dépôt: 10774220.7
(22) Date de dépôt: 08.11.2010
(51) Int. Cl.: F02M 35/10, F02B 29/04

(54) **MODULE D'ALIMENTATION EN GAZ D'UN MOTEUR DE VEHICULE AUTOMOBILE, ENSEMBLE D'UNE CULASSE D'UN MOTEUR ET D'UN TEL MODULE, ET MOTEUR DE VEHICULE AUTOMOBILE COMPORTANT UN TEL ENSEMBLE**
GASZUFUHRMODUL FÜR EINEN KRAFTFAHRZEUGMOTOR, ANORDNUNG EINES MOTORZYLINDERKOPFS UND EINES DERARTIGEN MODULS SOWIE KRAFTFAHRZEUGMOTOR MIT DERARTIGEM MODUL
GAS SUPPLY MODULE FOR A MOTOR VEHICLE ENGINE, ASSEMBLY OF AN ENGINE CYLINDER HEAD AND SUCH A MODULE, AND MOTOR VEHICLE ENGINE COMPRISING SUCH A MODULE

(30) Priorité: 27.11.2009 FR 0905701
(43) Date de publication de la demande: 03.10.2012
(73) Titulaire: VALEO SYSTEMES THERMIQUES, 78320 Le Mesnil Saint-Denis (FR)
(72) Inventeur: LEROUX, Samuel, F-78300 Poissy (FR)
(74) Mandataire: Cardon, Nicolas
(86) Numéro de dépôt international: PCT/EP2010/067005
(87) Numéro de publication internationale: WO 2011/064087

(56) Documents cités:
- WO-A1-2009/141711
- DE-A1-102007 029 036
- FR-A1- 2 908 833
- US-A1- 2004 079 348

## Description

L'invention concerne un module d'alimentation en gaz d'un moteur de véhicule automobile, un ensemble d'une culasse d'un moteur et d'un tel module, et un moteur de véhicule automobile comportant un tel ensemble.

L'invention concerne plus particulièrement un module d'alimentation en gaz d'un moteur comportant un échangeur de chaleur apte à refroidir des gaz en vue de leur admission dans un volume d'entrée d'une culasse du moteur et une vanne d'alimentation en gaz apte à orienter les gaz vers le volume d'entrée de la culasse et/ou au travers de l'échangeur de chaleur et un élément d'interface fermant le volume de la culasse.

Un moteur thermique de véhicule automobile comporte une chambre de combustion, généralement formée par une pluralité de cylindres, dans laquelle un mélange de comburant et de carburant est brûlé pour générer le travail du moteur. Le comburant comporte de l'air, qui peut être comprimé ou non, selon que le moteur comporte un turbocompresseur ou non. L'air peut par ailleurs être mélangé à des gaz d'échappement: on parle de gaz d'échappement recirculés. Les gaz admis dans la chambre de combustion seront dénommés gaz d'alimentation.

Il est connu que les gaz d'alimentation soient reçus au niveau d'un répartiteur d'admission, souvent désigné par l'homme du métier sous sa dénomination anglaise "intake manifold". Le répartiteur d'admission est fixé sur la culasse du moteur, au niveau de l'entrée des cylindres. En fonction du régime moteur, les gaz d'admission peuvent être refroidis, en tout ou partie, ou pas. En conséquence, il est connu de prévoir deux canalisations alimentant le répartiteur : l'une acheminant directement les gaz d'alimentation dans le répartiteur, l'autre les acheminant indirectement via un échangeur de chaleur, qui permet de refroidir les gaz qui le traverse, ou dans certains cas de les réchauffer.

Il est aussi connu un module d'alimentation en gaz d'un moteur de véhicule automobile monté sur un moteur comportant un échangeur de chaleur logé dans un boîtier intégrant des boites collectrices d'entrée et de sortie pour les gaz d'alimentation (encore appelés gaz d'admission), la boite collectrice de sortie formant un élément d'interface fermant le volume d'entrée de la culasse du moteur. Dans cet art antérieur, il est prévu qu'une des boites collectrices de l'échangeur de chaleur supporte une vanne.

Le support de la vanne entraîne des contraintes au niveau de la boite collectrice. Ces contraintes sont liées aux vibrations et aux tensions occasionnées par le poids de la vanne, auxquelles peuvent s'ajouter, en plus, des contraintes liées à la circulation des gaz d'alimentation comprimés traversant dans la boite collectrice de l'échangeur de chaleur.

Il est donc nécessaire de prévoir des moyens de rigidification de la boite collectrice pour que cette dernière ne se détériore pas du fait des vibrations ou de la pression des gaz d'alimentation. Ces moyens de rigidification ne permettent pas de proposer un design compact pour le module d'alimentation en gaz du moteur.

Le document WO 2009/141711 A1 décrit un module d'alimentation en gaz d'un moteur dans lequel une vanne et l'échangeur de chaleur sont fixés sur une plaque destinée à être fixée directement sur la culasse.

L'invention vise à proposer un module d'alimentation en gaz d'un moteur, qui se présente de manière compacte tout en présentant une bonne résistance aux contraintes dues au support de la vanne.

A cet effet, l'invention propose un module d'alimentation en gaz d'un moteur tel que précédemment décrit dans lequel l'élément d'interface et la vanne sont conformés pour permettre une fixation de la vanne à la culasse par l'intermédiaire d'au moins un premier moyen de fixation traversant au moins l'élément d'interface.

Un tel module permet de déplacer la plupart des contraintes liées au support de la vanne au niveau de la culasse du moteur. Une telle configuration entraîne un module d'admission de gaz plus compact que celui proposé par l'art antérieur tout en renforçant sa rigidité.

Des modes de réalisation particuliers de l'invention proposent que :
- l'élément d'interface est réalisé sous la forme d'une plaque d'interface, la plaque d'interface comportant au moins un orifice de passage et la vanne comportant une bride munie d'au moins un orifice de fixation, et l'orifice de passage venant en regard de l'orifice de fixation de manière à former un passage pour ledit premier moyen de fixation,
- la bride est prévue en vis-à-vis de la plaque d'interface de manière à ce que ces dernières s'étendent dans des plans parallèles,
- l'élément d'interface est réalisé sous la forme d'une plaque d'interface, la plaque d'interface comportant au moins un évidement formant un orifice de passage et la vanne comportant au moins une excroissance munie d'un orifice de fixation, et l'excroissance de la vanne est introduite dans l'évidement et l'orifice de fixation reçoit le premier moyen de fixation à la culasse,
- le premier moyen de fixation est une vis,
- la vanne comporte des nervures de renfort, lesdites nervures de renfort étant disposées à proximité d'une zone du module comportant le premier moyen de fixation,
- l'échangeur de chaleur comporte un boîtier assujetti à l'élément d'interface,
- l'élément d'interface comporte une périphérie et présente au moins une protubérance disposée au niveau de la périphérie, la protubérance étant apte à recevoir un deuxième moyen de fixation apte à fixer l'élément d'interface sur la culasse,
- la vanne est une vanne double, comportant un conduit d'entrée, un conduit de sortie direct fixé sur l'élément d'interface en vis-à-vis d'une cavité permettant au conduit de sortie direct de déboucher dans le volume d'entrée de la culasse, et un conduit de sortie indirect débouchant dans une boîte d'entrée de l'échangeur de chaleur, et
- l'élément d'interface comporte un orifice, dit de sortie de l'échangeur de chaleur, l'orifice de sortie de l'échangeur étant placé en vis-à-vis de l'échangeur de chaleur et étant apte à permettre une communication entre les gaz traversant l'échangeur de chaleur et le volume d'entrée de la culasse.

L'invention concerne aussi un ensemble d'une culasse d'un moteur de véhicule automobile et d'un module tel que précédemment décrit dans lequel la culasse comporte des orifices aptes à coopérer avec les premiers et seconds moyens de fixation en vue de la fixation du module sur la culasse.

L'invention concerne encore un moteur thermique de véhicule automobile comportant une chambre de combustion et un ensemble d'une culasse et d'un module d'alimentation en gaz d'un moteur tel que précédemment décrit.

L'invention sera mieux comprise à l'aide de la description suivante de la forme de réalisation préférée du dispositif et du moteur de l'invention, en référence aux dessins annexés, sur lesquels:
- la figure 1 représente une vue en perspective éclatée d'un module d'alimentation en gaz selon une forme de réalisation de l'invention,
- la figure 2 représente une vue de dessous d'un module d'alimentation en gaz selon une première forme de réalisation de l'invention,
- la figure 3 représente une vue en perspective d'un module d'alimentation en gaz selon la première forme de réalisation de l'invention,
- la figure 4 représente une vue en perspective d'un module d'alimentation en gaz selon une deuxième forme de réalisation de l'invention,
- la figure 5 représente une vue de dessus d'un module d'alimentation en gaz selon la deuxième forme de réalisation de l'invention, et
- la figure 6 représente un mode de réalisation de la liaison entre un échangeur de chaleur et un élément d'interface dans un module d'alimentation en gaz selon l'invention.

L'invention concerne un module 20 d'alimentation en gaz d'un moteur. Le module comporte un échangeur de chaleur 22 apte à refroidir des gaz en vue de leur admission dans un volume d'entrée d'une culasse (non représentée) du moteur, une vanne 24 d'alimentation en gaz apte à orienter les gaz vers le volume d'entrée de la culasse et/ou au travers de l'échangeur de chaleur 22, et un élément d'interface 26 fermant le volume d'entrée de la culasse.

L'échangeur de chaleur 22 comporte, dans les exemples de réalisation, un boîtier 42 assujetti à l'élément d'interface 26, par exemple, par brasage ou soudage.

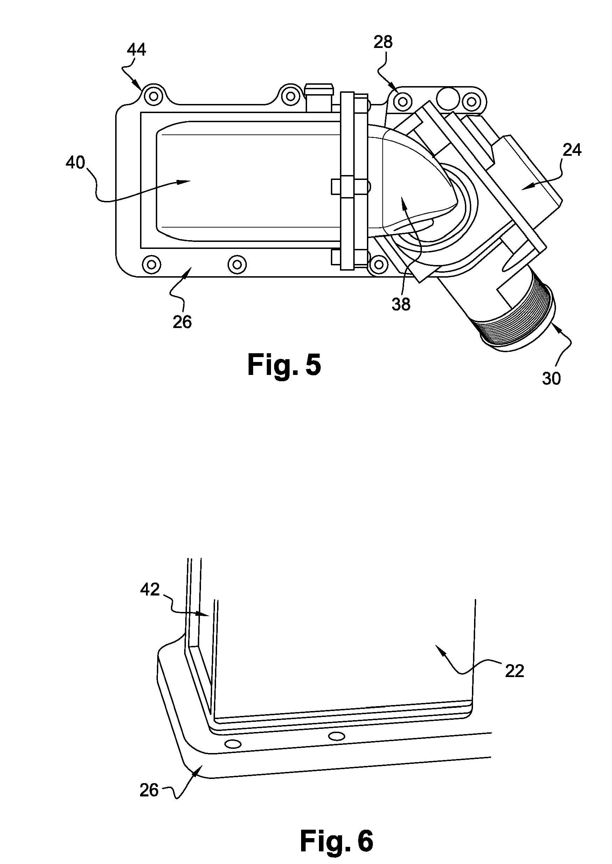

Dans le mode de réalisation illustré à la figure 6, le boîtier 42 est formé par quatre plaques métalliques, par exemple en aluminium, assemblées les unes aux autres, par exemple, par brasage.

Les plaques du boîtier 42 forment une enveloppe comportant quatre faces dites pleines et deux faces dites libres. Les faces libres du boîtier 42 sont situées en face l'une de l'autre.

Un faisceau d'échange de chaleur (non représenté) est inséré dans le boîtier 42. Ce faisceau pourra, par exemple être réalisé sous la forme d'un empilement de plaques, non représentées, ménageant un passage pour les gaz d'alimentation et un passage pour un fluide caloporteur. Ici, une boite collectrice d'entrée (encore appelée boite diffuseur) 40 pour les gaz d'alimentation est fixée à une des faces libres du boîtier 42 tandis que l'élément d'interface 26 est fixé à l'autre face libre.

La vanne 24, quant à elle, pourra par exemple être une vanne double, comportant un conduit d'entrée 30, un conduit de sortie 32 direct fixé sur l'élément d'interface 26, et un conduit de sortie indirect 38 débouchant dans la boîte d'entrée 40 de l'échangeur de chaleur 22. Le conduit de sortie direct 32 est fixé sur l'élément d'interface 26 en vis-à-vis d'une cavité 36 de l'élément d'interface 26 permettant au conduit de sortie direct 32 de déboucher dans le volume d'entrée de la culasse.

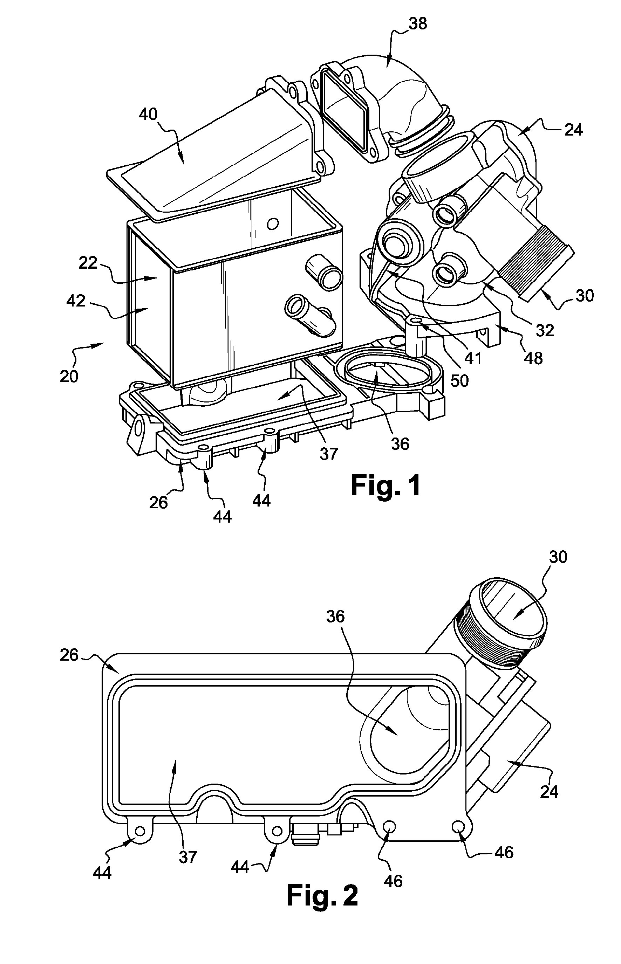

Dans le mode de réalisation illustré à la figure 1, le conduit de sortie indirect 38 est réalisé sous la forme d'un élément rapporté, une fois le module 20 assemblé, sur le corps de la vanne 24 et sur la boite diffuseur 40. Le conduit de sortie 32 direct est, quant à lui, ici réalisé venu de matière du corps de la vanne 24.

Ainsi, les gaz d'alimentation du moteur pénétrant dans le conduit d'entrée 30 de la vanne 24 peuvent être, soit directement introduits dans la culasse du moteur par l'intermédiaire du conduit de sortie direct 32, soit indirectement introduits dans la culasse du moteur, par l'intermédiaire du conduit de sortie indirect 38, qui impose un trajet via l'échangeur de chaleur 22.

Les conduits de sortie indirect 38 et direct 32 pourront présenter au niveau de leur extrémité liées, respectivement, avec la boite diffuseur 40 et la plaque d'interface 26 une bride de fixation pour assujettir lesdits conduits de sortie 38 et 32, respectivement, à la boite collectrice d'entrée 40 et à une plaque d'interface 26.

Dans le cas d'une vanne double, cette dernière est agencée pour que les gaz d'alimentation puissent être répartis en tout ou partie dans l'un et/ou l'autre des conduits de sortie 32 et 38 ; il est ainsi possible de réguler la proportion de gaz d'alimentation subissant un traitement thermique, par exemple un refroidissement, et celle qui ne l'est pas.

Dans un mode de réalisation particulier, la vanne 24 pourra comporter des nervures de renfort 41. Ces nervures de renfort 41, pourront par exemple être disposées à proximité d'une zone du module comportant un premier moyen de fixation (décrit plus loin).

Dans le mode de réalisation illustré à la figure 1, les nervures de renfort 41 sont placées au niveau du conduit de sortie direct 32. Plus particulièrement, ici, les nervures de renfort 41 s'étendent à proximité de la moitié du conduit de sortie direct 32 jusqu'à la bride de fixation du conduit de sortie direct 32 à la plaque d'interface 26.

L'élément d'interface 26 est, ici, destiné à être en contact immédiat/direct avec la culasse du moteur. En d'autres termes, l'élément d'interface 26 est monté directement sur la culasse du moteur.

Dans un mode de réalisation particulier de l'invention, l'échangeur de chaleur pourra être assujetti à l'élément d'interface 26.

Dans les modes de réalisation illustrés aux figures 1 à 6, l'élément d'interface 26 fermant le volume de la culasse définit un passage pour les gaz sortant de la vanne sans passer par l'échangeur de chaleur et/ou pour les gaz sortant de l'échangeur de chaleur.

Dans les exemples illustrés ici, l'élément d'interface 26 est réalisé sous la forme d'une plaque d'interface 26. Un mode de réalisation non illustré propose que l'élément d'interface 26 soit une boite collectrice, de préférence de sortie (encore appelée boite répartitrice), de l'échangeur de chaleur 22.

Selon l'invention, l'élément d'interface 26 et la vanne 24 sont conformés pour permettre une fixation de la vanne 24 à la culasse par l'intermédiaire d'au moins un premier moyen de fixation 28 traversant au moins l'élément d'interface 26.

Dans les modes de réalisation illustrés ici, le premier moyen est une vis.

Autrement dit, la vanne 24 est en contact avec l'élément d'interface 26 (ici, la plaque 26) mais sans y être fixée. La fixation de la vanne 24 est effectuée sur la culasse du moteur. Le premier moyen de fixation 28 permet, dans un mode de réalisation particulier de l'invention, de maintenir en place l'ensemble élément d'interface 26 - vanne 24.

L'élément d'interface 26 (ici, la plaque d'interface 26) comporte une périphérie et présente au moins une protubérance 44 disposée au niveau de la périphérie. La protubérance 44 est apte à recevoir un deuxième moyen de fixation, ici aussi une vis, apte à fixer l'élément d'interface 26 sur la culasse.

Un mode de réalisation propose que les protubérances 44 soient au moins placées en vis-à-vis de l'échangeur de chaleur 22 et plus particulièrement de son boîtier 42.

De plus, l'élément d'interface 26 comporte un orifice 37, dit de sortie de l'échangeur de chaleur, placé en vis-à-vis de l'échangeur de chaleur (et plus particulièrement en vis-à-vis de son boîtier 42). L'orifice de sortie de l'échangeur de chaleur est apte à permettre une communication entre les gaz traversant l'échangeur de chaleur 22 et le volume d'entrée de la culasse.

Dans ce mode de réalisation, l'orifice de sortie 37 de l'échangeur de chaleur 22 et la cavité 36 permettant au conduit de sortie direct 32 de déboucher dans le volume d'entrée de la culasse sont placés à distance l'un de l'autre. En d'autres termes, ces deux ouvertures 26 et 37 de l'élément d'interface 26 sont distinctes l'une de l'autre.

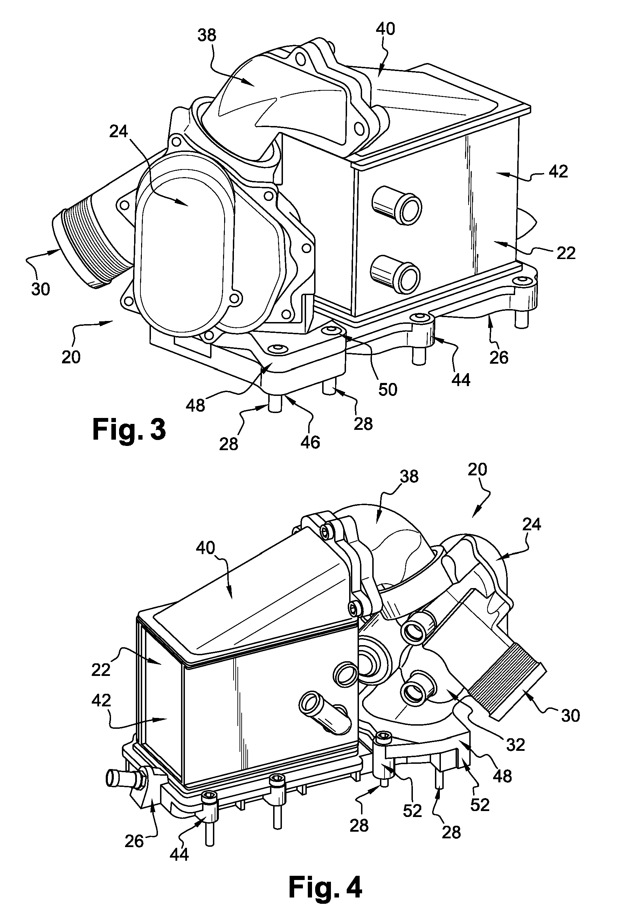

Selon un premier mode de réalisation illustré notamment aux figures 2 et 3, l'élément d'interface 26 est réalisé sous la forme d'une plaque d'interface 26 comme déjà décrit plus haut.

Dans cet exemple, la plaque d'interface 26 comporte au moins un orifice de passage 46. La vanne 24 comporte, quant à elle, une bride 48, dite distale, munie d'au moins un orifice de fixation 50. La bride distale 48 est placée à l'extrémité distale de l'entrée de la vanne 24 et permet la fixation du conduit de sortie direct 32 à la plaque d'interface 26.

Ici, l'orifice de passage 46 de la plaque d'interface 26 vient en regard de l'orifice de fixation 50 du conduit de sortie direct 32 et ceci de manière à former un passage pour le premier moyen de fixation 28. En d'autres termes, l'orifice de passage 46 et l'orifice de fixation 50 sont mis face à face pour former un conduit débouchant de part et d'autre de la plaque d'interface 26 et de la bride distale 48 (et donc du conduit de sortie direct 32), ce conduit accueillant le premier moyen de fixation 28.

Dans ce mode de réalisation, la bride distale 48 est prévue en vis-à-vis de la plaque d'interface 26 de manière à ce que ces dernières s'étendent dans des plans parallèles. Autrement dit, ici, la bride distale 48 est superposée sur la plaque d'interface 26.

Selon un deuxième mode de réalisation illustré aux figures 4 et 5 propose, ici aussi, que l'élément d'interface 26 soit réalisé sous la forme d'une plaque d'interface 26.

Dans ce mode de réalisation, la plaque d'interface 26 comporte au moins un évidement formant un orifice de passage. La vanne 24 comporte, quant à elle, au moins une excroissance (ou jambage) 52 munie d'un orifice de fixation.

L'excroissance 52 de la vanne 24 est introduite dans l'évidement/orifice de passage de la plaque d'interface 26. Dans cet exemple de réalisation, l'orifice de fixation reçoit le premier moyen de fixation 28 à la culasse. Un mode de réalisation particulier propose que l'excroissance 52 de la vanne 24 et l'évidement de la plaque d'interface 26 soient de forme complémentaire.

En d'autres termes, dans ce mode de réalisation, au moins une partie de la plaque d'interface 26 enveloppe l'excroissance 52 et, par conséquent, le premier moyen de fixation 28. Encore autrement dit, le moyen de fixation 28 est entouré par l'orifice de fixation de la vanne 24 et au moins partiellement par plaque d'interface 26.

L'invention concerne aussi un ensemble d'une culasse d'un moteur de véhicule automobile d'un module 20 tel que décrit précédemment dans lequel ladite culasse comporte des orifices aptes à coopérer avec les premiers 28 et seconds moyens de fixation en vue de la fixation du module 20 sur la culasse.

Dans un tel cas, on pourra envisager, par exemple d'usiner ou de tarauder les orifices de la culasse du moteur.

L'invention concerne également un moteur thermique de véhicule automobile comportant une chambre de combustion et une culasse et d'un module d'alimentation en gaz d'un moteur tel que précédemment décrit.

L'invention ne se limite pas aux modes de réalisation décrits ci avant, seulement à titre d'exemples, mais elle englobe toutes les variantes que pourra envisager l'homme de l'art dans le cadre des revendications ci-après. Les variantes décrites précédemment peuvent être prises séparément ou en combinaison les unes avec les autres.

## Revendications

1. Module d'alimentation (20) en gaz d'un moteur comportant un échangeur de chaleur (22) apte à refroidir des gaz en vue de leur admission dans un volume d'entrée d'une culasse du moteur et une vanne (24) d'alimentation en gaz apte à orienter lesdits gaz vers le volume d'entrée de ladite culasse et/ou au travers dudit échangeur de chaleur (22), ledit module (20) comportant en outre un élément d'interface (26) fermant ledit volume d'entrée de ladite culasse, ledit élément d'interface (26) et ladite vanne (24) sont conformés pour permettre une fixation de ladite vanne (24) à ladite culasse par l'intermédiaire d'au moins un premier moyen de fixation (28) traversant au moins l'élément d'interface (26), ledit élément d'interface (26) étant réalisé sous la forme d'une plaque d'interface (26), **caractérisé en ce que** ladite plaque d'interface (26) comportant au moins un évidement formant un orifice de passage et ladite vanne (24) comportant au moins une excroissance (52) munie d'un orifice de fixation, ladite excroissance (52) de la vanne (24) étant introduite dans l'évidement et ledit orifice de fixation reçoit ledit premier moyen de fixation (28) à la culasse.

2. Module selon la revendication 1, dans lequel ledit élément d'interface (26) est réalisé sous la forme d'une plaque d'interface (26), ladite plaque d'interface (26) comportant au moins un orifice de passage (46) et ladite vanne (24) comportant une bride (48) munie d'au moins un orifice de fixation (50), et ledit orifice de passage (46) venant en regard dudit orifice de fixation (50) de manière à former un passage pour ledit premier moyen de fixation (28).

3. Module selon la revendication 2 dans lequel ladite bride (48) est prévue en vis-à-vis de ladite plaque d'interface (26) de manière à ce que ces dernières s'étendent dans des plans parallèles.

4. Module selon l'une des revendications précédentes, dans lequel ledit premier moyen de fixation (28) est une vis.

5. Module selon l'une des revendications précédentes, dans lequel ladite vanne (24) comporte des nervures de renfort (41), lesdites nervures de renfort (41) étant disposées à proximité d'une zone du module comportant le premier moyen de fixation (28).

6. Module selon l'une des revendications précédentes, dans lequel ledit échangeur de chaleur (22) comporte un boîtier (42) assujetti audit élément d'interface (26).

7. Module selon l'une des revendications précédentes, dans lequel ledit élément d'interface (26) comporte une périphérie et présente au moins une protubérance (44) disposée au niveau de ladite périphérie, ladite protubérance (44) étant apte à recevoir un deuxième moyen de fixation apte à fixer ledit élément d'interface sur ladite culasse.

8. Module selon l'une des revendications précédentes, dans lequel la vanne (24) est une vanne double, comportant un conduit d'entrée (30), un conduit de sortie direct (32) fixé sur l'élément d'interface (26) en vis-à-vis d'une cavité (36) permettant audit conduit de sortie direct (32) de déboucher dans le volume d'entrée de la culasse, et un conduit de sortie indirect (38) débouchant dans une boîte d'entrée (40) dudit échangeur de chaleur (22).

9. Module selon l'une des revendications précédentes, dans lequel ledit élément d'interface (26) comporte un orifice, dit de sortie de l'échangeur de chaleur (22), ledit orifice de sortie de l'échangeur (22) étant placé en vis-à-vis de l'échangeur de chaleur et étant apte à permettre une communication entre les gaz traversant ledit échangeur de chaleur (22) et ledit volume d'entrée de ladite culasse.

10. Ensemble d'une culasse d'un moteur de véhicule automobile et d'un module (20) selon l'une des revendications précédentes, dans lequel ladite culasse comporte des orifices aptes à coopérer avec les premiers (28) et seconds moyens de fixation en vue de la fixation dudit module (20) sur ladite culasse.

11. Moteur thermique de véhicule automobile, comportant une chambre de combustion et un ensemble d'une culasse et d'un module d'alimentation (20) en gaz d'un moteur selon la revendication précédente.

## Patentansprüche

1. Modul (20) für die Versorgung einer Kraftmaschine mit Gas, das einen Wärmetauscher (22), der Gase kühlen kann, um sie in ein Einlassvolumen eines Zylinderkopfs der Kraftmaschine einzulassen, und ein Ventil (24) für die Versorgung mit Gas, das die Gase zu dem Einlassvolumen des Zylinderkopfs und/oder durch den Wärmetauscher (22) lenken kann, umfasst, wobei das Modul (20) außerdem ein Grenzflächenelement (26) umfasst, das das Einlassvolumen des Zylinderkopfs verschließt,
wobei das Grenzflächenelement (26) und das Ventil (24) so beschaffen sind, dass sie eine Befestigung des Ventils (24) an dem Zylinderkopf über wenigstens ein erstes Befestigungsmittel (28) ermöglichen, das wenigstens durch das Grenzflächenelement (26) verläuft, wobei das Grenzflächenelement (26) in Form einer Grenzflächenplatte (26) verwirklicht ist, **dadurch gekennzeichnet, dass**
die Grenzflächenplatte (26) wenigstens eine Aussparung umfasst, die eine Durchlassöffnung bildet, und das Ventil (24) wenigstens eine Erhebung (52), die mit einer Befestigungsöffnung versehen ist, umfasst, wobei die Erhebung (52) des Ventils (24) in die Aussparung eingesetzt ist und die Befestigungsöffnung das erste Mittel (28) für die Befestigung an dem Zylinderkopf aufnimmt.

2. Modul nach Anspruch 1, wobei das Grenzflächenelement (26) in Form einer Grenzflächenplatte (26) verwirklicht ist, wobei die Grenzflächenplatte (26) wenigstens eine Durchlassöffnung (46) aufweist und das Ventil (24) einen Steg (48) aufweist, der mit wenigstens einer Befestigungsöffnung (50) versehen ist, wobei sich die Durchlassöffnung (46) gegenüber der Befestigungsöffnung (50) befindet, derart, dass ein Durchlass für die ersten Befestigungsmittel (28) gebildet wird.

3. Modul nach Anspruch 2, wobei der Steg (48) gegenüber der Grenzflächenplatte (26) in der Weise vorgesehen ist, dass sich diese Letzteren in parallelen Ebenen erstrecken.

4. Modul nach einem der vorhergehenden Ansprüche, wobei das erste Befestigungsmittel (28) eine Schraube ist.

5. Modul nach einem der vorhergehenden Ansprüche, wobei das Ventil (24) Verstärkungsrippen (41) umfasst, wobei die Verstärkungsrippen (41) in der Nähe einer Zone des Moduls, die das erste Befestigungsmittel (28) aufweist, angeordnet sind.

6. Modul nach einem der vorhergehenden Ansprüche, wobei der Wärmetauscher (22) ein Gehäuse (42) umfasst, das an das Grenzflächenelement (26) gebunden ist.

7. Modul nach einem der vorhergehenden Ansprüche, wobei das Grenzflächenelement (26) einen Umfang besitzt und wenigstens einen Vorsprung (44) aufweist, der auf Höhe des Umfangs angeordnet ist, wobei der Vorsprung (44) ein zweites Befestigungsmittel aufnehmen kann, das das Grenzflächenelement an dem Zylinderkopf befestigen kann.

8. Modul nach einem der vorhergehenden Ansprüche, wobei das Ventil (24) ein Doppelventil ist, das eine Einlassleitung (30), eine direkte Auslassleitung (32), die an dem Grenzflächenelement (26) gegenüber einem Hohlraum (36) befestigt ist, der der direkten Auslassleitung (32) ermöglicht, in das Einlassvolumen des Zylinderkopfs zu münden, und eine indirekte Auslassleitung (38), die in ein Einlassgehäuse (40) des Wärmetauschers (22) mündet, umfasst.

9. Modul nach einem der vorhergehenden Ansprüche, wobei das Grenzflächenelement (26) eine Öffnung, die Auslass des Wärmetauschers (22) genannt wird, aufweist, wobei die Auslassöffnung des Tauschers (22) gegenüber dem Wärmetauscher angeordnet ist und eine Kommunikation zwischen den Gasen, die durch den Wärmetauscher (22) strömen, und dem Einlassvolumen des Zylinderkopfs ermöglicht.

10. Anordnung eines Zylinderkopfs einer Kraftmaschine eines Kraftfahrzeugs und eines Moduls (20) nach einem der vorhergehenden Ansprüche, wobei der Zylinderkopf Öffnungen aufweist, die mit ersten (28) und zweiten Befestigungsmitteln zusammenwirken können, um das Modul (20) an dem Zylinderkopf zu befestigen.

11. Brennkraftmaschine eines Kraftfahrzeugs, die eine Verbrennungskammer und eine Anordnung eines Zylinderkopf und eines Moduls (20) für die Gasversorgung einer Kraftmaschine nach dem vorhergehenden Anspruch umfasst.

## Claims

1. Gas supply module (20) for an engine comprising a heat exchanger (22) capable of cooling gases for the intake thereof into an inlet volume of a cylinder head of the engine and a gas supply valve (24) capable of directing said gases toward the inlet volume of said cylinder head and/or through said heat exchanger (22), said module (20) also comprising an interface element (26) closing said inlet volume of said cylinder head, said interface element (26) and said valve (24) being configured in order to permit the fixing of said valve (24) to said cylinder head via at least one first means for fixing (28) passing through at least the interface element (26), said interface element (26) being produced in the form of an interface plate (26), **characterized in that** said interface plate (26) comprises at least one recess forming a through-passage and said valve (24) comprises at least one protrusion (52) provided with a fixing orifice, said protrusion (52) of the valve (24) being introduced into the recess and said fixing orifice receiving said first means for fixing (28) to the cylinder head.

2. Module according to Claim 1, in which said interface element (26) is produced in the form of an interface plate (26), said interface plate (26) comprising at least one through-passage (46) and said valve (24) comprising a flange (48) provided with at least one fixing orifice (50) and said through-passage (46) being aligned with said fixing orifice (50) so as to form a passage for said first means for fixing (28).

3. Module according to Claim 2 in which said flange (48) is provided opposite said interface plate (26) so that said flange and plate extend in parallel planes.

4. Module according to one of the preceding claims, in which said first means for fixing (28) is a screw.

5. Module according to one of the preceding claims, in which said valve (24) comprises reinforcing ribs (41), said reinforcing ribs (41) being arranged in the vicinity of a zone of the module comprising the first means for fixing (28).

6. Module according to one of the preceding claims, in which said heat exchanger (22) comprises a casing (42) attached to said interface element (26).

7. Module according to one of the preceding claims, in which said interface element (26) comprises a periphery and has at least one protrusion (44) arranged in the region of said periphery, said protrusion (44) being capable of receiving a second means for fixing, capable of fixing said interface element to said cylinder head.

8. Module according to one of the preceding claims, in which the valve (24) is a double valve comprising an inlet duct (30), a direct outlet duct (32) fixed to the interface element (26) opposite a cavity (36) permitting said direct outlet duct (32) to open into the inlet volume of the cylinder head and an indirect outlet duct (38) opening into an intake manifold (40) of said heat exchanger (22).

9. Module according to one of the preceding claims, in which said interface element (26) comprises an orifice, known as the outlet orifice of the heat exchanger (22), said outlet orifice of the heat exchanger (22) being placed opposite the heat exchanger and being capable of permitting communication between the gases passing through said heat exchanger (22) and said inlet volume of said cylinder head.

10. Assembly of a cylinder head of a motor vehicle engine and a module (20) according to one of the preceding claims, in which said cylinder head comprises orifices capable of cooperating with the first (28) and second means for fixing in order to fix said module (20) to said cylinder head.

11. Internal combustion engine of a motor vehicle, comprising a combustion chamber and an assembly of a cylinder head and a gas supply module (20) for an engine according to the preceding claim.
